# EUROPEAN PATENT SPECIFICATION

(11) **EP 1 809 681 B1**
(45) Date of publication and mention of the grant of the patent: **21.04.2010**
(21) Application number: 05787198.0
(22) Date of filing: 15.09.2005
(51) Int. Cl.: C08G 18/28, C08G 18/67, C09D 175/16, C08G 18/48, C08G 18/76, C08G 18/10

(54) **CURABLE LIQUID RESIN OPTICAL FIBER UPJACKET COMPOSITION**
HÄRTBARE FLÜSSIGHARZLICHTWELLENLEITER-UPJACKET-ZUSAMMENSETZUNG
COMPOSITION DE RÉSINE LIQUIDE DURCISSABLE POUR ENVELOPPE EXTERNE DE FIBRE OPTIQUE

(30) Priority: 24.09.2004 JP 2004277657; 30.11.2004 JP 2004347424
(43) Date of publication of application: 25.07.2007
(60) Divisional application: 08165739.7
(73) Proprietor: DSM IP Assets B.V., 6411 TE Heerlen (NL); JSR Corporation, Tokyo 104-8410 (JP)
(72) Inventor: YAMAGUCHI, Hiroshi, Tokyo 104-8410 (JP); KAMO, Satoshi, Tokyo 104-8410 (JP); SUGIMOTO, Masanobu, Tokyo 104-8410 (JP); SHIGEMOTO, Takeo, Tokyo 104-8410 (JP); MURPHY, Edward, Joseph, Arlington Heights, IL 60005 (US)
(74) Representative: van Loon, C.J.J.
(86) International application number: PCT/NL2005/000672
(87) International publication number: WO 2006/049488

(56) References cited:
- EP-A- 0 326 984
- US-A- 4 192 762
- US-A1- 2002 156 145
- US-A1- 2003 133 679
- PATENT ABSTRACTS OF JAPAN vol. 2000, no. 13, 5 February 2001 (2001-02-05) & JP 2000 273127 A (JSR CORP; DSM NV), 3 October 2000 (2000-10-03) cited in the application

## Description

### Field of the invention

The present invention relates to a curable liquid resin optical fiber upjacket composition applied to and cured on the surface of a resin-coated optical fiber.

### Background of the invention

In the manufacture of optical fibers, a glass fiber is produced by spinning molten glass and a resin coating is provided over the glass fiber for protection and reinforcement. This step is referred to as fiber drawing. As the resin coating, a structure is known in which a flexible primary coating layer is formed on the surface of the optical fiber and a rigid secondary coating layer is applied over the primary coating layer. A structure is also known in which the resin-coated optical fibers are placed side by side on a plane and bundled with a bundling material to produce a ribbon-shaped coating layer. A resin composition for forming the primary coating layer is called a primary material, a resin composition for forming the secondary coating layer is called a secondary material, and a resin composition for forming the ribbon-shaped coating layer is called a ribbon matrix material.

The outer diameter of the resin-coated optical fiber is usually about 250 µm. The outer diameter is further increased to about 500 µm by applying an additional resin layer to the resin-coated optical fiber in order to improve manual workability. This resin coating layer is usually called an upjacket layer, and a resin-coated optical fiber including the upjacket layer is usually called an upjacketed optical fiber. Since the upjacket layer does not require optical properties, the upjacket layer need not have transparency. The upjacket layer may be colored for identification by naked eye observation. It is important that the upjacket layer be easily removed from the resin-coated optical fiber without causing damage to the underlying primary or secondary coating layer when connecting the resin-coated optical fibers.

A curable resin used as the optical fiber coating material, including the material for the upjacket layer, is required to have superior coatability which allows high speed fiber drawing; sufficient strength and flexibility; excellent heat resistance; excellent weatherability; superior resistance to acid, alkali, and the like; excellent oil resistance; small degrees of water absorption and hygroscopicity; low hydrogen gas generation; excellent liquid storage stability; and the like.

However, since a related-art upjacket material firmly adheres to the overlying ribbon matrix material layer or underlying primary or secondary coating layer, the upjacket layer may be damaged when removing the ribbon matrix material layer to expose the upjacketed optical fiber, or the primary or secondary coating layer may be damaged when removing the upjacket layer from the upjacketed optical fiber. This hinders optical fiber connection workability.

As curable liquid resin optical fiber upjacket compositions provided with improved removability, a composition containing three types of polysiloxane compounds (patent document 1) and a composition containing organic or inorganic material particles (patent documents 2 and 3) have been disclosed.
[Patent document 1] Japanese Patent Application Laid-open No. 10-257717
[Patent document 2] Japanese Patent Application Laid-open No. 9-324136
[Patent document 3] Japanese Patent Application Laid-open No. 2000-273127

However, an upjacket layer formed by using the above-mentioned composition exhibits insufficient removability.

### Summary of the invention

An objective of the present invention is to provide a curable liquid resin optical fiber upjacket composition which exhibits an excellent function as an optical fiber coating material and exhibits excellent removability from the adjacent coating layer.

The inventors of the present invention have prepared various urethane (meth)acrylate-containing curable liquid resin compositions as well as (meth)acrylate-containing curable liquid resin compositions and examined the resulting cured products as to the functions and removability as the optical fiber coating layer. As a result, it has been found that the above objective can be achieved by adding a urethane (meth)acrylate additive containing one (meth)acryloyl group.

The present invention provides a curable liquid resin optical fiber upjacket composition, comprising:
(A) a (meth)acrylate oligomer containing two or more (meth)acryloyl groups;
(B) a reactive diluent;
(C) a polymerization initiator; and
(D) a urethane (meth)acrylate compound containing at least one (meth)acryloyl group shown by the following general formula (1).

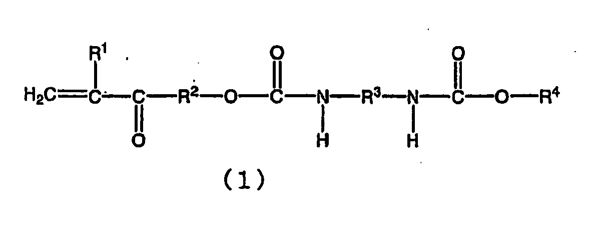

In the formula (1), R¹ represents a hydrogen atom, R² and R³ individually represent divalent organic groups, and R⁴ represents a polypropylene glycol monobutyl ether residue having a molecular weight of 500 to 20000.

The present invention also provides an optical fiber upjacket layer comprising a cured product of the curable liquid resin optical fiber upjacket composition of the invention.

The present invention further provides an upjacketed optical fiber comprising the optical fiber upjacket layer.

The present invention also relates to a process of making an optical fiber upjacket layer comprising the step of curing the liquid resin optical fiber upjacket composition.

An optical fiber upjacket layer obtained by using the resin composition of the present invention has sufficient strength and weatherability and exhibits excellent removability. Therefore, optical fiber connection workability can be improved.

### Description of the invention:

The urethane (meth)acrylate used as the component (A) of the present invention is produced by reacting a polyol, a diisocyanate, and a hydroxyl group-containing (meth)acrylate. Specifically, the urethane (meth)acrylate (A) is produced by reacting isocyanate groups of the diisocyanate with a hydroxyl group of the polyol and a hydroxyl group of the hydroxyl group-containing (meth)acrylate. The component (A) usually has a structure in which the hydroxyl groups at the terminals of the polyol bond to one isocyanate group of the diisocyanate, and the other isocyanate group of the diisocyanate bonds to the hydroxyl group of the hydroxyl group-containing (meth)acrylate.

This reaction is carried out by reacting the polyol, diisocyanate, and hydroxyl group-containing (meth)acrylate all together; reacting the polyol and the diisocyanate, and reacting the resulting product with the hydroxyl group-containing (meth)acrylate; reacting the diisocyanate and the hydroxyl group-containing (meth)acrylate, and reacting the resulting product with the polyol; reacting the diisocyanate and the hydroxyl group-containing (meth)acrylate, reacting the resulting product with the polyol, and further reacting the resulting product with the hydroxyl group-containing (meth)acrylate; or the like.

As examples of the polyol preferably used in this reaction, a polyether polyol, a polyester polyol, a polycarbonate polyol, a polycaprolactone polyol, and the like can be given. There are no specific limitations to the manner of polymerization of the structural units of the polyol, which may be any of random polymerization, block polymerization, and graft polymerization. As examples of the polyether polyol, polyethylene glycol, polypropylene glycol, polytetramethylene glycol, polyhexamethylene glycol, polyheptamethylene glycol, polydecamethylene glycol, aliphatic polyether polyol obtained by ring-opening copolymerization of two or more ion-polymerizable cyclic compounds, and the like can be given. As examples of the ion-polymerizable cyclic compound, cyclic ethers such as ethylene oxide, propylene oxide, butene-1-oxide, isobutene oxide, 3,3-bischloromethyloxetane, tetrahydrofuran, 2-methyltetrahydrofuran, 3-methyltetrahydrofuran, dioxane, trioxane, tetraoxane, cyclohexene oxide, styrene oxide, epichlorohydrin, glycidyl (meth)acrylate, allyl glycidyl ether, allyl glycidyl carbonate, butadiene monoxide, isoprene monoxide, vinyloxetane, vinyltetrahydrofuran, vinylcyclohexene oxide, phenyl glycidyl ether, butyl glycidyl ether, glycidyl benzoate, and the like can be given. A polyether polyol obtained by ring-opening copolymerization of the ion-polymerizable cyclic compound and a cyclic imine such as ethyleneimine, cyclic lactonic acid such as β-propyolactone or glycolic acid lactide, or dimethylcyclopolysiloxane may also be used. As examples of specific combinations of the ion-polymerizable cyclic compounds, tetrahydrofuran and propylene oxide, tetrahydrofuran and 2-methyltetrahydrofuran, tetrahydrofuran and 3-methyltetrahydrofuran, tetrahydrofuran and ethylene oxide, propylene oxide and ethylene oxide, butene-1-oxide and ethylene oxide, a ternary copolymer of tetrahydrofuran, butene-1-oxide, and ethylene oxide, and the like can be given. The ring-opening copolymer of the ion-polymerizable cyclic compounds may be a random copolymer or a block copolymer.

These aliphatic polyether polyols are commercially available as PTMG650, PTMG1000, PTMG2000 (manufactured by Mitsubishi Chemical Corp.), PPG400, PPG1000, PPG2000, PPG3000, Excenol 720, 1020, 2020 (manufactured by Asahi Glass Urethane Co., Ltd.), PEG1000, Unisafe DC1100, DC1800 (manufactured by Nippon Oil and Fats Co., Ltd.), PPTG2000, PPTG1000, PTG400, PTGL2000 (manufactured by Hodogaya Chemical Co., Ltd.), Z-3001-4, Z-3001-5, PBG2000A, PBG2000B (manufactured by Daiichi Kogyo Seiyaku Co., Ltd.), and the like.

Further examples of the polyether polyol include cyclic polyether polyols such as alkylene oxide addition polyol of bisphenol A, alkylene oxide addition polyol of bisphenol F, hydrogenated bisphenol A, hydrogenated bisphenol F, alkylene oxide addition polyol of hydrogenated bisphenol A, alkylene oxide addition polyol of hydrogenated bisphenol F, alkylene oxide addition polyol of hydroquinone, alkylene oxide addition polyol of naphthohydroquinone, alkylene oxide addition polyol of anthrahydroquinone, 1,4-cyclohexane polyol and alkylene oxide addition polyol thereof, tricyclodecane polyol, tricyclodecanedimethanol, pentacyclopentadecane polyol, and pentacyclopentadecanedimethanol. Of these, alkylene oxide addition polyol of bisphenol A and tricyclodecanedimethanol are preferable. These polyols are commercially available as Uniol DA400, DA700, DA1000, DB400 (manufactured by Nippon Oil and Fats Co., Ltd.), tricyclodecanedimethanol (manufactured by Mitsubishi Chemical Corp.), and the like. Examples of other cyclic polyether polyols include alkylene oxide addition polyol of bisphenol A, alkylene oxide addition polyol of bisphenol F, alkylene oxide addition polyol of 1,4-cyclohexane polyol, and the like.

As examples of the polyester polyol, a polyester polyol obtained by reacting a dihydric alcohol with a dibasic acid and the like can be given. As examples of the dihydric alcohol, ethylene glycol, polyethylene glycol, propylene glycol, polypropylene glycol, tetramethylene glycol, polytetramethylene glycol, 1,6-hexane polyol, neopentyl glycol, 1,4-cyclohexanedimethanol, 3-methyl-1,5-pentane polyol, 1,9-nonane polyol, 2-methyl-1,8-octane polyol, and the like can be given. As examples of the dibasic acid, phthalic acid, isophthalic acid, terephthalic acid, maleic acid, fumaric acid, adipic acid, and sebacic acid, and the like can be given. These polyester polyols are commercially available as Kurapol P-2010, PMIPA, PKA-A, PKA-A2, PNA-2000 (manufactured by Kuraray Co., Ltd.), and the like.

As examples of the polycarbonate polyol, polycarbonate of polytetrahydrofuran, polycarbonate of 1,6-hexane polyol, and the like can be given. These polycarbonate polyols are commercially available as DN-980, 981, 982, 983 (manufactured by Nippon Polyurethane Industry Co., Ltd.), PC-8000 (manufactured by PPG), PC-THF-CD (manufactured by BASF), and the like.

As examples of the polycaprolactone polyol, a polycaprolactone polyol obtained by reacting ε-caprolactone with a diol such as ethylene glycol, polyethylene glycol, propylene glycol, polypropylene glycol, tetramethylene glycol, polytetramethylene glycol, 1,2-polybutylene glycol, 1,6-hexane polyol, neopentyl glycol, 1,4-cyclohexanedimethanol, or 1,4-butane polyol can be given. These polyols are commercially available as Placcel 205, 205AL, 212, 212AL, 220, 220AL (manufactured by Daicel Chemical Industries, Ltd.), and the like.

Polyols other than those mentioned above may also be used. Given as examples of such polyols are ethylene glycol, propylene glycol, 1,4-butane polyol, 1,5-pentane polyol, 1,6-hexane polyol, neopentyl glycol, 1,4-cyclohexanedimethanol, dimethylol compound of dicyclopentadiene, tricyclodecanedimethanol, β-methyl-δ-valerolactone, hydroxy-terminated polybutadiene, hydroxy-terminated hydrogenated polybutadiene, castor oil-modified polyol, polyol-terminated compound of polydimethylsiloxane, polydimethylsiloxane carbitol-modified polyol, and the like.

A diamine may be used in combination with the polyol. As examples of the diamine, ethylenediamine, tetramethylenediamine, hexamethylenediamine, p-phenylenediamine, 4,4'-diaminodiphenylmethane, hetero atom-containing diamine, polyether diamine, and the like can be given.

Of these polyols, the polyether polyol, particularly the aliphatic polyether polyol, is preferable. Specifically, polypropylene glycol and a copolymer of butene-1-oxide and ethylene oxide are preferable. These polyols are commercially available as PPG400, PPG1000, PPG2000, PPG3000, Excenol 720, 1020, 2020 (manufactured by Asahi Glass Urethane Co., Ltd.), and the like. The copolymer of butene-1-oxide and ethylene oxide is commercially available as EOBO500, EO/BO1000, EOB02000, EO/B03000, EOB04000 (manufactured by Daiichi Kogyo Seiyaku Co., Ltd.), and the like.

As examples of the diisocyanate, 2,4-tolylene diisocyanate, 2,6-tolylene diisocyanate, 1,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylenebis(4-cyclohexyl isocyanate), 2,2,4-trimethylhexamethylene diisocyanate, bis(2-isocyanate ethyl)fumarate, 6-isopropyl-1,3-phenyl diisocyanate; 4-diphenylpropane diisocyanate, lysine diisocyanate, hydrogenated diphenylmethane diisocyanate, hydrogenated xylylene diisocyanate, tetramethylxylylene diisocyanate, 2,5(2,6)-bis(isocyanatomethyl)-bicyclo[2.2.1]heptane, and the like can be given. Of these, 2,4-tolylene diisocyanate, isophorone diisocyanate, xylylene diisocyanate, methylenebis(4-cyclohexyl isocyanate), and the like are particularly preferable.

These diisocyanates may be used either individually or in combination of two or more.

Examples of the hydroxyl group-containing (meth)acrylate include 2-hydroxyethyl (meth)acrylate, 2-hydroxypropyl (meth)acrylate, 2-hydroxybutyl (meth)acrylate, 2-hydroxy-3-phenyloxypropyl (meth)acrylate, 1,4-butane polyol mono(meth)acrylate, 2-hydroxyalkyl(meth)acryloyl phosphate, 4-hydroxycyclohexyl (meth)acrylate, 1,6-hexanepolyol mono(meth)acrylate, neopentyl glycol mono(meth)acrylate, trimethylolpropane di(meth)acrylate, trimethylolethane di(meth)acrylate, pentaerythritol tri(meth)acrylate, dipentaerythritol penta(meth)acrylate, and (meth)acrylates shown by the following formula (2) or (3). 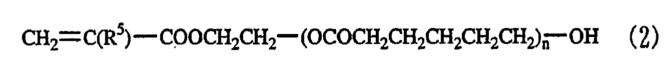 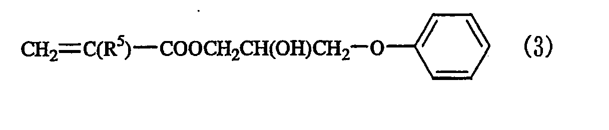 wherein R⁵ represents a hydrogen atom or a methyl group, and n represents an integer from 5 to 15.

A compound obtained by the addition reaction of (meth)acrylic acid and a glycidyl group-containing compound, such as alkyl glycidyl ether, allyl glycidyl ether, or glycidyl (meth)acrylate, may also be used. Of these hydroxyl group-containing (meth)acrylates, 2-hydroxyethyl (meth)acrylate and 2-hydroxypropyl (meth)acrylate are preferable.

These hydroxyl group-containing (meth)acrylate compounds may be used either individually or in combination of two or more.

The polyol, the diisocyanate, and the hydroxyl group-containing (meth)acrylate are preferably used so that the isocyanate group in the diisocyanate and the hydroxyl group in the hydroxyl group-containing (meth)acrylate are respectively 1.1 to 3 equivalents and 0.2 to 1.5 equivalents for one equivalent of the hydroxyl group in the polyol.

In the reaction of these compounds, it is preferable to use a urethanization catalyst, such as copper naphthenate, cobalt naphthenate, zinc naphthenate, dibutyltin dilaurate, triethylamine, 1,4-diazabicyclo[2.2.2]octane, or 2,6,7-trimethyl-1,4-diazabicyclo[2.2.2]octane, in an amount of 0.01 to 1 part by weight for 100 parts by weight of the total amount of the reactants. The reaction temperature is usually 10 to 90°C, and preferably 30 to 80°C.

A part of the hydroxyl group-containing (meth)acrylate may be replaced by a compound having a functional group which can be added to an isocyanate group. As examples of such a compound, γ-mercaptotrimethoxysilane, γ-aminotrimethoxysilane, and the like can be given. Adhesion to a substrate such as glass can be improved by using such a compound.

The curable liquid resin composition of the present invention may further include a urethane (meth)acrylate obtained by reacting one mol of the diisocyanate with two mol of the hydroxyl group-containing (meth)acrylate compound. Examples of such a urethane (meth)acrylate include a reaction product of hydroxyethyl (meth)acrylate and 2,4-tolylene diisocyanate, a reaction product of hydroxyethyl (meth)acrylate and 2,5 (2,6)-bis(isocyanatomethyl)-bicyclo[2.2.1]heptane, a reaction product of hydroxyethyl (meth)acrylate and isophorone diisocyanate, a reaction product of hydroxypropyl (meth)acrylate and 2,4-tolylene diisocyanate, and a reaction product of hydroxypropyl (meth)acrylate and isophorone diisocyanate.

The urethane (meth)acrylate (A) is used in an amount of 30 to 90 wt%, preferably 35 to 85 wt%, and still more preferably 40 to 80 wt% for the total amount of the components (A), (B), and (C). If the amount is less than 30 wt%, the modulus of elasticity of the resulting cured product significantly varies depending on the temperature. If the amount exceeds 90 wt%, the viscosity of the curable liquid resin composition may be increased.

The component (A) can also be a (meth)acrylate oligomer, for example, non-urethane (meth)acrylate oligomer such as bisphenol A epoxy acrylate CN 120Z available from Sartomer, Photomer 3016 available from Cognis, Ebecryl 3700 available from UCB, epoxy novolac acrylated CN112 available from Sartomer, and the like.

The (meth)acrylate oligomer (A) is added to the composition of the present invention in an amount of 30 to 90 wt%, preferably 35 to 85 wt%, and still more preferably 40 to 80 wt% for 100 wt% of the components (A), (B), and (C) in total.

As the reactive diluent (B), a polymerizable monofunctional compound or a polymerizable polyfunctional compound may be used. Examples of the monofunctional compound include vinyl group-containing lactams such as N-vinylpyrrolidone and N-vinylcaprolactam; alicyclic structure-containing (meth)acrylates such as isobornyl (meth)acrylate, bornyl (meth)acrylate, tricyclodecanyl (meth)acrylate, and dicyclopentanyl (meth)acrylate; benzyl (meth)acrylate, 4-butylcyclohexyl (meth)acrylate, acryloylmorpholine, vinylimidazole, vinylpyridine, and the like. Further examples include 2-hydroxyethyl (meth)acrylate, 2-hydroxypropyl (meth)acrylate, 2-hydroxybutyl (meth)acrylate, methyl (meth)acrylate, ethyl (meth)acrylate, propyl (meth)acrylate, isopropyl (meth)acrylate, butyl (meth)acrylate, amyl (meth)acrylate, isobutyl (meth)acrylate, t-butyl (meth)acrylate, pentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, tetrahydrofurfuryl (meth)acrylate, butoxyethyl (meth)acrylate, ethoxydiethylene glycol (meth)acrylate, benzyl (meth)acrylate, phenoxyethyl (meth)acrylate, polyethylene glycol mono(meth)acrylate, polypropylene glycol mono(meth)acrylate, methoxyethylene glycol (meth)acrylate, ethoxyethyl (meth)acrylate, methoxypolyethylene glycol (meth)acrylate, methoxypolypropylene glycol (meth)acrylate, diacetone(meth)acrylamide, isobutoxymethyl (meth)acrylate, N,N-dimethyl(meth)acrylamide, t-octyl(meth)acrylamide, dimethylaminoethyl (meth)acrylate, diethylaminoethyl (meth)acrylate, 7-amino-3,7-dimethyloctyl (meth)acrylate, N,N-diethyl(meth)acrylamide, N,N-dimethylaminopropyl(meth)acrylamide, hydroxybutyl vinyl ether, lauryl vinyl ether, cetyl vinyl ether, 2-ethylhexyl vinyl ether, and compounds shown by the following formulas (4) to (7). 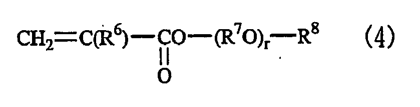 wherein R⁶ represents a hydrogen atom or a methyl group, R⁷ represents an alkylene group having 2 to 6, and preferably 2 to 4 carbon atoms, R⁸ represents a hydrogen atom or an alkyl group having 1 to 12, and preferably 1 to 9 carbon atoms, and r represents an integer from 0 to 12, and preferably from 1 to 8. 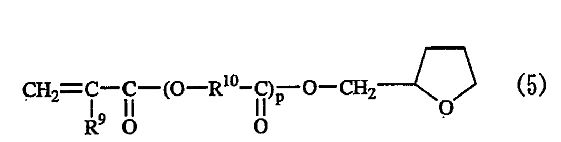 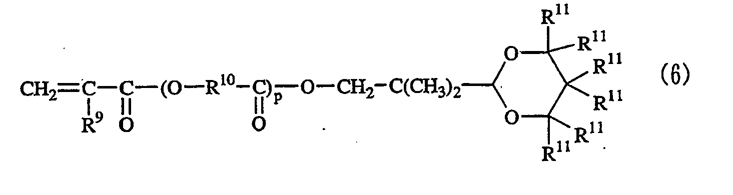 wherein R⁹ represents a hydrogen atom or a methyl group, R¹⁰ represents an alkylene group having 2 to 8, and preferably 2 to 5 carbon atoms, R¹¹ represents a hydrogen atom or a methyl group, and p represents an integer from 1 to 4. 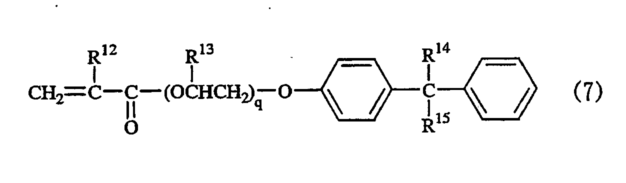 wherein R¹², R¹³, R¹⁴ , and R¹⁵ individually represent a hydrogen atom or a methyl group, and q represents an integer from 1 to 5.

Of these polymerizable monofunctional compounds, the vinyl group-containing lactams such as N-vinylpyrrolidone and N-vinylcaprolactam, isobornyl (meth)acrylate, and lauryl acrylate are preferable.

These polymerizable monofunctional compounds are commercially available as IBXA (manufactured by Osaka Organic Chemical Industry, Ltd.), Aronix M-111, M-113, M-114, M-117, TO-1210 (manufactured by Toagosei Co., Ltd.), and the like.

Examples of the polymerizable polyfunctional compound include trimethylolpropane tri(meth)acrylate, trimethylolpropanetrioxyethyl (meth)acrylate, pentaerythritol tri(meth)acrylate, triethylene glycol diacrylate, tetraethylene glycol di(meth)acrylate, tricyclodecanediyldimethylene di(meth)acrylate, 1,4-butane polyol di(meth)acrylate, 1,6-hexane polyol di(meth)acrylate, neopentyl glycol di(meth)acrylate, tripropylene glycol di(meth)acrylate, neopentyl glycol di(meth)acrylate, both terminal (meth)acrylic acid addition product of bisphenol A diglycidyl ether, pentaerythritol tri(meth)acrylate, pentaerythritol tetra(meth)acrylate, polyester di(meth)acrylate, tris(2-hydroxyethyl)isocyanurate tri(meth)acrylate, tris(2-hydroxyethyl)isocyanurate di(meth)acrylate, tricyclodecanedimethanol di(meth)acrylate, di(meth)acrylate of ethylene oxide or propylene oxide addition bisphenol A, di(meth)acrylate of ethylene oxide or propylene oxide addition hydrogenated bisphenol A, epoxy (meth)acrylate prepared by addition of (meth)acrylate to diglycidyl ether of bisphenol A, triethylene glycol divinyl ether, compounds shown by the following formula (8), and the like. 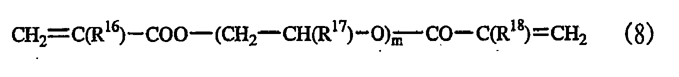 wherein R¹⁶ and R¹⁷ individually represent a hydrogen atom or a methyl group, and m represents an integer from 1 to 100.

Of these polymerizable polyfunctional compounds, the compounds shown by the formula (8), such as ethylene glycol di(meth)acrylate, polyethylene glycol di(meth)acrylate, tricyclodecanediyldimethylene di(meth)acrylate, di(meth)acrylate of ethylene oxide addition bisphenol A, and tris(2-hydroxyethyl)isocyanurate tri(meth)acrylate, are preferable.

These polymerizable polyfunctional compounds are commercially available as Yupimer UV, SA1002 (manufactured by Mitsubishi Chemical Corp.), Aronix M-215, M-315, M-325 (manufactured by Toagosei Co., Ltd.), and the like.

In addition, Aronix TO-1210 (manufactured by Toagosei Co., Ltd.) may also be used.

The reactive diluent (B) is used in an amount of usually 1 to 70 wt%, preferably 10 to 70 wt%, and particularly preferably 20 to 60 wt% for 100 wt% of the total amount of the components (A), (B), and (C). If the amount is less than 1 wt%, curability may be impaired. If the amount exceeds 70 wt%, the applied composition may flow due to low viscosity.

The curable liquid resin composition of the present invention further includes a polymerization initiator as the component (C). As the polymerization initiator, a heat polymerization initiator or a photoinitiator may be used.

If the curable liquid resin composition of the present invention is cured by applying heat, a heat polymerization initiator such as a peroxide or an azo compound is usually used. As specific examples of the heat polymerization initiator, benzoyl peroxide, t-butyl oxybenzoate, azobisisobutyronitrile, and the like can be given.

If the curable liquid resin composition of the present invention is cured by applying light, a photoinitiator is used. It is preferable to use a photosensitizer in combination with the photoinitiator, as required. Examples of the photoinitiator include 1-hydroxycyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4' -dimethoxybenzophenone, 4,4'-diaminobenzophenone, Michler's ketone, benzoin propyl ether, benzoin ethyl ether, benzyl methyl ketal, 1-(4-isopropylphenyl)-2-hydroxy-2-methylpropan-1-one, 2-hydroxy-2-methyl-1-phenylpropan-1-one, thioxanethone, diethylthioxanthone, 2-isopropylthioxanthone, 2-chlorothioxanthone, 2-methyl-1-[4-(methylthio)phenyl]-2-morpholino-propan-1-one, 2,4,6-trimethylbenzoyl diphenylphosphine oxide, bis-(2,6-dimethoxybenzoyl)-2,4,4-trimethylpentylphosphine oxide; Irgacure 184, 369, 651, 500, 907, CGI 1700, CGI 1750, CGI 1850, CG24-61, Darocure 1116, 1173 (manufactured by Ciba Specialty Chemicals Co.); Lucirin TPO (manufactured by BASF); and Ubecryl P36 (manufactured by UCB). As examples of the photosensitizer, triethylamine, diethylamine, N-methyldiethanoleamine, ethanolamine, 4-dimethylaminobenzoic acid, methyl 4-dimethylaminobenzoate, ethyl 4-dimethylaminobenzoate, isoamyl 4-dimethylaminobenzoate; Ubecryl P102, 103, 104, 105 (manufactured by UCB); and the like can be given.

When curing the curable liquid resin composition of the present invention by applying heat and ultraviolet rays, the heat polymerization initiator and the photoinitiator may be used in combination. The polymerization initiator (C) is used in an amount of preferably 0.1 to 10 wt%, and particularly preferably 0.3 to 7 wt% for the total amount of the components (A), (B), and (C).

The curable liquid resin composition of the present invention includes (D) a urethane (meth)acrylate compound containing at least one (meth)acryloyl group and shown by the following general formula (1).

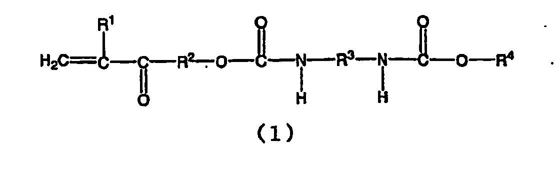

In the formula (1), R¹ represents a hydrogen atom, R² and R³ individually represent divalent organic groups, and R⁴ represents a polypropylene glycol monobutyl ether residue having a molecular weight of 500 to 20000.

The component (D) is important from the viewpoint of improving the removability of an optical fiber upjacket layer formed by using the resin composition of the present invention from an adjacent layer. A stable removability and no exudation over time can be obtained by using the urethane (meth)acrylate compound containing at least one (meth)acryloyl group and defined in claim 1 as the component (D).

The component (D) is obtained by bonding a hydroxyl group-containing acrylate to one isocyanate group of a diisocyanate via a urethane bond, and bonding a poly(propylene glycol) monobutyl ether having a molecular weight of 500 to 20000 to the other isocyanate group via urethane bond.

As the hydroxyl group-containing acrylate and the diisocyanate used to produce the component (D), the hydroxyl group-containing acrylate and the diisocyanate containing an acryloyl group used to produce the component (A) may be used.

The molecular weight of the poly(propylene glycol) monobutyl ether used to produce the component (D) is 500 to 20000, preferably 700 to 10000, and more preferably 1000 to 8000.

There are no specific limitations to the manner of polymerization of the structural units of the polyol, which may be any of random polymerization, block polymerization, and graft polymerization.

In the production of the component (D), it is preferable to use a urethanization catalyst, such as copper naphthenate, cobalt naphthenate, zinc naphthenate, dibutyltin dilaurate, triethylamine, 1,4-diazabicyclo[2.2.2]octane, or 2,6,7-trimethyl-1,4-diazabicyclo[2.2.2]octane, in an amount of 0.01 to 1 part by weight for 100 parts by weight of the total amount of the reactants. The reaction temperature is usually 10 to 90°C, and preferably 30 to 80°C.

The component (D) is used in an amount of preferably 1 to 70 wt%, more preferably 1 to 50 wt%, still more preferably 5 to 40 wt%, relative to the total weight of the components (A), (B), (C), and (D), from the viewpoint of ensuring removability, strength, weatherability and no exudation of the additive on the surface of the resulting upjacket layer.

The curable liquid resin composition of the present invention may include (E) a flame retardant. There are no specific limitations to the flame retardant (E). Examples of the flame retardant (E) include a halogen-based (bromine-based or chlorine-based) flame retardant, phosphorus-based flame retardant, nitrogen-based flame retardant and silicone-based flame retardant.

Examples of the bromine-based flame retardant include tetrabromobisphenol A (TBBPA), decabromodiphenyl oxide, hexabromocyclododecane, tribromophenol, ethylenebistetrabromophthalimide, TBBPA polycarbonate oligomer, brominated polystyrene, TBBPA epoxy oligomer, TBBPA bisbromopropyl ether, ethylenebispentabromodiphenol, pentabromobenzylacrylate, hexabromobenzene, brominated aromatic triazine, and the like.

As examples of the phosphorus-based flame retardant, a phosphate, halogen-containing phosphate, ammonium polyphosphate, red phosphorus compound, phosphaphenanthrene, and the like can be given.

As examples of the chlorine-based flame retardant, a chlorinated paraffin, perchlorocyclopentadecane, chlorendic acid, and the like can be given.

The flame retardant (E) is used in an amount of preferably 1 to 50 parts by weight, still more preferably 1 to 30 parts by weight, and particularly preferably 1 to 20 parts by weight for 100 parts by weight of the total amount of the components (A), (B), (C), and (D). If the amount is less than 1.0 part by weight, the flame retarding effect may be insufficient. If the amount exceeds 50 parts by weight, the flame retardant may bleed out from the resulting cured product, or the elastic properties of the resulting upjacket layer may be adversely affected.

Various additives such as an antioxidant, coloring agent, UV absorber, light stabilizer, silane coupling agent, heat polymerization inhibitor, leveling agent, surfactant, preservative, plasticizer, lubricant, solvent, filler, aging preventive, wettability improver, and coating surface improver may be optionally added to the curable liquid resin composition of the present invention insofar as the properties of the composition are not adversely affected.

The curable liquid resin composition of the present invention can be cured by applying heat and/or radiation. Radiation used herein refers to infrared rays, visible rays, ultraviolet rays, X-rays, electron beams, α-rays, β-rays, γ-rays, and the like.

The Young's modulus of the cured product of the curable liquid resin composition of the present invention is 100MPa to 600MPa, preferably 200 to 580 MPa. The curable liquid resin composition of the present invention is preferably applied to a thickness of 120 µm to 330 µm when forming an upjacket layer.

### EXAMPLES

The present invention is described below in detail by way of examples, which should not be construed as the limitation of the present invention.

### I. Preparation of Examples in Table 1:

### Comparative Synthesis Example 1: preparation of urethane acrylate oligomer (A)

A reaction vessel equipped with a stirrer was charged with 0.124 g of 2,6-di-t-butyl-p-cresol, 131.77 g of toluene diisocyanate, and 0.212 g of dibutyltin dilaurate. The mixture was cooled with ice to 15 to 20°C with stirring. After the slot dropwise addition of 114.02 g of hydroxyethyl acrylate, the mixture was allowed to react at 35°C or less for two hours with stirring. After the addition of 199.37 g of polytetramethylene glycol with a number average molecular weight of 2000 (PTMG2000; manufactured by Mitsubishi Chemical Corp.), 69.78 g of polyethylene glycol bisphenol A ether with a number average molecular weight of 400 (Uniol DA400; manufactured by Nippon Oil and Fats Co., Ltd.), and 0.200 g of dibutyltin dilaurate, the mixture was stirred at room temperature for one hour. The mixture was then stirred at 65°C for two hours in an oil bath. The reaction was terminated when the residual isocyanate content became 0.1 wt% or less. The resulting product was a mixed solution of three types of urethane (meth)acrylate oligomers (A), including a urethane acrylate oligomer (A-1) in which hydroxyethyl acrylate bonded to the terminal hydroxyl groups of polyethylene glycol bisphenol A ether via toluene diisocyanate, a urethane (meth)acrylate oligomer (A-2) in which hydroxyethyl acrylate bonded to the terminal hydroxyl groups of polytetramethylene glycol via toluene diisocyanate, and a urethane (meth)acrylate oligomer (A-3) in which hydroxyethyl acrylate bonded to two isocyanate groups of toluene diisocyanate.

### Comparative Synthesis Example 2: preparation 1 of urethane methacrylate (D1) containing one methacryloyl group

A reaction vessel equipped with a stirrer was charged with 230.57 g of isobornyl
acrylate, 0.184 g of 2,6-di-t-butyl-p-cresol, 102.63 g of toluene diisocyanate, and 0.615 g of dibutyltin dilaurate. The mixture was cooled with ice to 15°C or less with stirring. 76.69 g of 2-hydroxyethyl methacrylate was slowly added dropwise to the mixture while maintaining the solution temperature at 25°C or lower. Then, the mixture was stirred at 20°C for two hours. After the addition of 589.26 g of a polypropylene oxide ring-opening polymer having a number average molecular weight of 1000, the mixture was allowed to react at 50°C for two hours with stirring. The reaction was terminated when the residual isocyanate content became 0.1 wt% or less. The component (D1) thus obtained is called "D1-1"..

### Comparative Synthesis Example 3: preparation 2 of urethane methacrylate (D1) containing one methacryloyl group

A component (D1) was synthesized in the same manner as in Comparative Synthesis Example 2 except for using 607.44 g of a polypropylene oxide ring-opening polymer having a number average molecular weight of 2000 instead of the polypropylene oxide ring-opening polymer having a number average molecular weight of 1000. The component (D1) thus obtained is called "D1-2".

### Comparative Synthesis Example 4: preparation 3 of urethane methacrylate (D2) containing one acryloyl group

A reaction vessel equipped with a stirrer was charged with 0.184 g of 2,6-di-t-butyl-p-cresol, 31.20 g of toluene diisocyanate, and 0.615 g of dibutyltin dilaurate. The mixture was cooled with ice to 15°C or lower with stirring. 20.80 g of 2-hydroxyethyl acrylate was slowly added dropwise to the mixture while maintaining the solution temperature at 25°C or lower. Then, the mixture was stirred at 20°C for two hours. After the addition of 716.57 g of polypropylene oxide ring-opening polymer having a number average molecular weight of 4000, the mixture was allowed to react at 50°C for two hours with stirring. The reaction was terminated when the residual isocyanate content became 0.1 wt% or less. After the addition of 230.57 g of isobornyl acrylate at 50°C, the mixture was stirred for one hour to obtain a target urethane acrylate containing one acryloyl group. The component (D2) thus obtained is called "D2-1".

### Comparative Synthesis Example 5: preparation 4 of urethane acrylate (D3) containing one (meth)acryloyl group

A reaction vessel equipped with a stirrer was charged with 0.024 g of 2,6-di-t-butyl-p-cresol, 79.911 g of FM0411 (dimethylpolysiloxane-polyoxyethylene copolymer (molecular weight: 1170); manufactured by Chisso Corp.), 11.986 g of toluene diisocyanate, and 0.08 g of dibutyltin dilaurate. The mixture was cooled with ice to 15°C or lower with stirring. 7.991 g of 2-hydroxyethyl methacrylate was slowly added dropwise to the mixture at 25°C or lower. Then, the mixture was stirred at 20°C for two hours. The resulting mixture was allowed to react at 50°C for two hours with stirring. The reaction was terminated when the residual isocyanate content became 0.1 wt% or less. The target urethane acrylate containing one (meth)acryloyl group was thus obtained. The component (D3) thus obtained is called "D3-1 ".

### Comparative Synthesis Example 6: preparation 5 of urethane acrylate (D3) containing one (meth)acryloyl group

A component (D3) was synthesized in the same manner as in Comparative Synthesis Example 6 except for using 2-hydroxyethyl acrylate instead of 2-hydroxyethyl methacrylate. The component (D3) thus obtained is called "D3-2".

### Comparative Synthesis Example 7: preparation 1 of urethane acrylate containing one (meth)acryloyl group other than component (D)

A urethane acrylate was synthesized in the same manner as in Comparative Synthesis Example 2 except for using 2-hydroxyethyl acrylate instead of 2-hydroxyethyl methacrylate. The urethane acrylate containing one (meth)acryloyl group thus obtained is called "D1'-1".

### Comparative Examples 1 to 11

A reaction vessel equipped with a stirrer was charged with components of the composition shown in Table 1. The mixture was stirred at 50°C for two hours to obtain a curable liquid resin composition.

### Test Methods:

The curable liquid resin compositions obtained in the examples and comparative examples were cured according to the following method to prepare test specimens. The test specimens were evaluated as described below.

### 1. Young's modulus

The curable liquid resin composition was applied to a glass plate using an applicator bar with a gap size of 250 µm, and cured by applying ultraviolet rays at a dose of 1 J/cm² in air to obtain a Young's modulus measurement film. The film was cut into a sample in the shape of a strip so that the portion to be stretched had a width of 6 mm and a length of 25 mm. The sample was subjected to a tensile test at a temperature of 23°C and a humidity of 50%. The Young's modulus was calculated from the tensile strength at a tensile rate of 1 mm/min and a strain of 2.5%.

### 2. Removability

A primary material (R1164: manufactured by JSR Corporation), a secondary material (R3180: manufactured by JSR Corporation), and an ink material (FS blue ink: T&K TOKA) were applied to a glass fiber and cured by applying ultraviolet rays using a rewinder model (manufactured by Yoshida Kogyo Co., Ltd.) to obtain a resin-coated optical fiber having an outer diameter of 250 µm. The curable composition shown in Table 1 was applied to the resin-coated optical fiber as an upjacket material, and cured by applying ultraviolet rays using the above rewinder model to obtain an upjacketed optical fiber having an outer diameter of 500 µm. The resulting upjacketed optical fiber was used as the measurement sample.

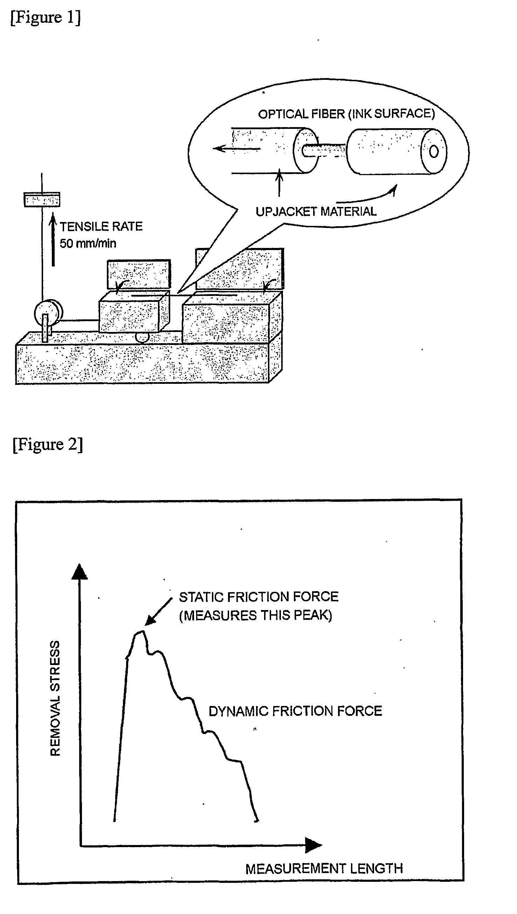

As shown in Figure 1, the upjacketed optical fiber was held by using a hot stripper (manufactured by Furukawa Electric Co., Ltd.) at a position 3 cm from the end. The upjacketed optical fiber was then pulled at a tensile rate of 50 m/min by using a tensile tester (manufactured by Shimadzu Corp.) to measure the coating removal stress (maximum stress shown in Figure 2) required for removing the upjacket layer. The measurement was carried out immediately after producing the upjacketed optical fiber (hereinafter referred to as "coating removal stress immediately after production").

This test method for measuring the removability is hereinafter referred as "50m/min test method".

The composition of the present invention, when cured, has a coating removal stress immediately after production of no more than 4.1N, when measured by the 50m/min test method.

The results are shown in Table 1. The amount of each component shown in Table 1 is indicated in parts by weight.

### II. Preparation of Examples in Table 2:

Synthesis of urethane acrylate (D4-1): 8.05g toluene diisocyanate was charged into a suitable reaction vessel supplied with agitation, temperature control (80°C), and dry air blanketing. At the same time 0.40g butylated hydroxy toluene (BHT), and 0.04g of dibutyl tin dilaurate (DBTDL) were added. 85.29g of PPG₂₅₀₀ monobutyl ether was then added at a rate that maintains reaction mix temperature between 18°C and 28°C. After the addition of the monobutyl ether was complete, the reaction mix was held at 28°C to 32°C for approximately 1 hour, or until suitable analysis for %NCO indicated proper degree of reaction. Then 6.22g of hydroxy ethyl acrylate is added, and the reaction mix was raised to 55° to 60°C and hold with agitation for approximately 2 hours, or until suitable analysis for %NCO indicated a completed reaction with less than about 0.2% of unreacted NCO.

The synthesis of other urethane acrylates (D4-2, D4-3, D4-4, D4-5) is similar to the one for D4-1.

### Preparation of Examples 1 to 5:

The upjacketed coating compositions of Examples 1 to 5 were prepared by mixing and heating the ingredients listed in Examples 1 to 5.

### Test Methods:

### 1. Young's modulus: See part A of Examples section

### 2. Removability:

A primary material (Desolite3471-1-129A: manufactured by DSM Desotech, Inc.), a secondary material (3471-2-136: manufactured by DSM Desotech, Inc.), and an ink material (Cablelite 751-017: manufactured by Desotech, Inc.) were applied to a glass fiber and cured by applying ultraviolet rays using a rewinder model OFC 52 (manufactured by Nextrom Technologies, Inc.) to obtain a resin-coated optical fiber having an outer diameter of 250 µm. The curable composition shown in Table 2 was applied to the resin-coated optical fiber as an upjacket material, and cured by applying ultraviolet rays using the above rewinder model to obtain an upjacketed optical fiber having an outer diameter of 500 µm). The resulting upjacketed optical fiber was used as the measurement sample.

The removability characteristics of the cured upjacketed coating was determine by measuring the peak force required to remove the cured upjacketed coating from the optical fiber using a stripping tool, the Micro-Strip Precision Stripper, available from Micro Electronics Inc.. A test method was developed on an Instron Tensile Tester Model 4201 or equivalent. This method allows quantitative and repeatable measurements to be made, thus allowing the differentiation between coating systems. The stripper tool is mounted in the bottom grips of the Instron Tensile Tester, after the fiber has been inserted into the stripper and the bottom of the tool has been secured tight with a small clamp. A constant amount of fiber, 2.5 cm (1 inch), is stripped through the blades, this length is measured as the sample is placed into the stripping tool. The top of the fiber is secured in the pneumatic top grip of the Instron. The initial distance between both grips is one inch. An appropriate load cell is used to determine the maximum force that is required to remove the tight-buffer coating. The crosshead speed of the Instron is set at a constant pull rate of 51 cm/min (20 inches/min).

The measurement was carried out immediately after producing the upj acketed optical fiber (hereinafter referred to as "coating removal stress immediately after production"). The measurement was also carried out after allowing the upj acketed optical fiber to stand at a temperature of 85°C and a relative humidity of 85% for 7 days (hereinafter referred to as "coating removal stress after high-temperature and high-humidity test'').

This test method for measuring the removability is hereinafter referred as 51 cm/min (20 inches/min) test method".

The composition of the present invention, when cured, has a coating removal stress immediately after production of less than 1800g, when measured by the 51 cm/min (20 inches/min) test method.

The composition of the present invention, when cured, has a coating removal stress after high-temperature and high-humidity test of less than 1800g, when measured by the 51 cm/min (20 inches/mi) test method.

The results are shown in Table 2. The amount of each component shown in Table 2 is indicated in parts by weight.

**Table1**

| | | Comparative Example | | | | | | | | Comparative Example | | |
|---|---|---|---|---|---|---|---|---|---|---|---|---|
| | | 1 | 2 | 3 | 4 | 5 | 6 | 7 | 8 | 9 | 10 | 11 |
| A | A-1 | 4.4 | 4.4 | 4.4 | 4.4 | 4.4 | 4.4 | 4.4 | 4.4 | 4.4 | 4.4 | 4.4 |
| | A-2 | 36.6 | 36.6 | 36.6 | 36.6 | 36.6 | 36.6 | 36.6 | 36.6 | 36.6 | 36.6 | 36.6 |
| | A-3 | 3.0 | 3.0 | 3.0 | 3.0 | 3.0 | 3.0 | 3.0 | 3.0 | 3.0 | 3.0 | 3.0 |
| B | N-Vinyl-2-pyrrolidone | 5.8 | 5.8 | 5.8 | 5.8 | 5.8 | 5.8 | 5.8 | 5.8 | 5.8 | 5.8 | 5.8 |
| | Isobomyl acrylate | 6.0 | 6.0 | 3.0 | | | | | | | | |
| | Polyoxyethylene nonyl phenyl ether acrylate | 15.4 | 15.4 | 15.4 | 15.4 | 15.4 | 15.4 | 15.4 | 15.4 | 15.4 | 15.4 | 15.4 |
| | Tricyclodecanedimethylol diacrylate | 2.3 | 2.3 | 2.3 | 2.3 | 2.3 | 2.3 | 2.3 | 2.3 | 2.3 | 2.3 | 2.3 |
| | Trimethylolpropane ethoxy triacrylate | 28.9 | 28.9 | 28.9 | 28.9 | 28.9 | 28.9 | 28.9 | 28.9 | 28.9 | 28.9 | 28.9 |
| C | Irgacure 184 | 2.9 | 2.9 | 2.9 | 2.9 | 2.9 | 2.9 | 2.9 | 2.9 | 2.9 | 2.9 | 2.9 |
| | Irganox 1035 | 0.3 | 0.3 | 0.3 | 0.3 | 0.3 | 0.3 | 0.3 | 0.3 | 0.3 | 0.3 | 0.3 |
| Total | | 105.6 | 105.6 | 102.6 | 99.6 | 99.6 | 102.6 | 99.6 | 99.6 | 99.6 | 99.6 | 99.6 |
| D1 | D1-1 | | | | | | 7.0 | | | | | |
| D1 | D1-2 | | 16.0 | 7.0 | | | | | | | | |
| D2 | D2-1 | 16.0 | | | | | | | | | | |
| D3 | D3-1 | | | | 10.0 | | | 10.0 | 4.0 | | | |
| D3 | D3-2 | | | | | 10.0 | | | | | | |
| | D1'-1 | | | | | | | | | | | 10.0 |
| | PPG4000 | | | 10.0 | | | | 10.0 | 10.0 | | | |
| | SH28PA | 10.0 | 10.0 | 10.0 | | | 10.0 | | | | 10.0 | 10.0 |
| | Young's modulus (MPa) | 230 | 245 | 210 | 180 | 161 | 310 | 140 | 160 | 530 | 180 | 340 |
| | Coating removal stress (N) | 4.0 | 3.6 | 3.1 | 3.6 | 4.1 | 3.9 | 3.1 | 3.3 | 6.5 | 4.6 | 4.3 |

| | | | | | | | | | | | | |
|---|---|---|---|---|---|---|---|---|---|---|---|---|
| PPG4000: polypropylene glycol having molecular weight of 4000 manufactured by Asahi Glass Urethane Co., Ltd. SH28PA: dimethylpolysiloxane-polyoxyalkylene copolymer (molecular weight: about 3700) manufactured by Dow Corning Toray Co., Ltd. | | | | | | | | | | | | |

**Table 2**

| | Composition Ingredients | Ex. 1 | Ex. 2 | Ex. 3 | Ex. 4 | Ex. 5 |
|---|---|---|---|---|---|---|
| A | Epoxy diacrylate oligomer (a) | 46.0 | 46.0 | 45.0 | 34.0 | 24.0 |
| B1 | Phenoxy ethyl acrylate (b) | 20.0 | 20.0 | ---- | 20.0 | ---- |
| B2 | 2-Ethylhexyl acrylate (c) | ---- | ---- | 20.0 | ---- | ---- |
| B3 | Isobornyl acrylate (d) | --- | ---- | ---- | 10.0 | 20.0 |
| B4 | Tripropylene glycol diacrylate (e) | ---- | ---- | ---- | ---- | 10.0 |
| | Dow Corning 160 Surfactant | 2.0 | 2.0 | 2.0 | 2.0 | 2.0 |
| C1 | Irgacure 1884 Photoinitiator | 2.0 | 2.0 | ---- | 4.0 | 4.0 |
| C2 | Darocure 1173 Photoinitiator | ---- | ---- | 3.0 | ---- | ---- |
| D4 | D4-1 (f) | ---- | 30.0 | ---- | ---- | ---- |
| D4 | D4-2 (g) | 30.0 | ---- | ---- | ---- | ---- |
| D4 | D4-3 (h) | ---- | ---- | 30.0 | ---- | ---- |
| D4 | D4-4 (i) | ---- | ---- | ---- | ---- | 40.0 |
| D4 | D4-5 (j) | ---- | ---- | ---- | 30.0 | ---- |
| Total ingredients | | 100.0 | 100.0 | 100.0 | 100.0 | 100.0 |
| Viscosity (mPas) @ 25°C | | 5840 | 6340 | 1780 | 1640 | 1080 |
| Modulus (MPa) | | 474 | 568 | 170 | 324 | 200 |
| Coating removal stress immediately after production (g) | | <1800 | <1800 | <1800 | <1800 | <1800 |
| Coating removal stress after high temperature and high humidity test (g) | | <1800 | <1800 | <1800 | <1800 | <1800 |

| | | | | | | |
|---|---|---|---|---|---|---|
| (a) Available from Sartomer Co. as CN120Z. (b) Available from Sartomer Co. as SR339 (c) Available from Aldrich Chemical Co. (d) Available from Sartomer Co. as SR506 (e) Available from Sartomer Co. as SR306 (f) 0481-160A Additive: Reactive additive prepared from Polypropylene glycol monobutyl ether (2500 Mw), reacted in order with Toluene diisocyanate and Hydroxy ethyl acrylate, all available from Aldrich Chem. Co. (g) 0481-161B Additive: Reactive additive prepared from Polypropylene glycol monobutyl ether (4000 Mw), reacted in order with Toluene diisocyanate and Hydroxy ethyl acrylate, all available from Aldrich Chem. Co. (h) 0481-164 Additive: Reactive additive prepared from Polypropylene glycol monobutyl ether (4000 Mw), reacted in order with Isophorone diisocyanate and Hydroxy ethyl acrylate, all available from Aldrich Chem. Co. (i) 0481-167 Additive: Reactive additive prepared from Polypropylene glycol monobutyl ether (2500 Mw), reacted in order with Isophorone diisocyanate available from Aldrich Chem. Co., and Caprolactone Acrylate available from Sartomer Co. as SR495. (j) 0481-170AAdditive: Reactive additive prepared from Ucon LB-1715 available from Ashland Chemical Co., reacted in order with Isophorone diisocyanate and Hydroxy ethyl acrylate available from Aldrich Chem. Co. (k) Photoinitiators available from Ciba Specialty Chemicals Corp. | | | | | | |

### Brief Description of the Drawings:

[Figure 1] Figure 1 shows a schematic diagram of a tensile tester.
[Figure 2] Figure 2 shows a schematic diagram of stress required for removing a coating.

## Claims

1. A curable liquid resin optical fiber upjacket composition, comprising:
(A) a (meth)acrylate oligomer containing two or more (meth)acryloyl groups;
(B) a reactive diluent;
(C) a polymerization initiator; and
(D) a urethane (meth)acrylate compound containing at least one (meth)acryloyl group shown by the following general formula (1) 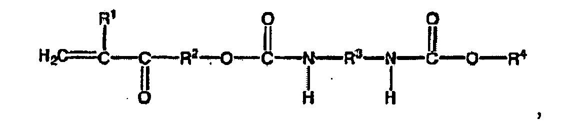
wherein R¹ represents a hydrogen atom, R² and R³ individually represent divalent organic groups, and R⁴ represents a polypropylene glycol monobutyl ether residue having a molecular weight of 500 to 20000.

2. The composition according to claim 1, wherein the (meth)acrylate is a urethane (meth)acrylate.

3. The composition according to any of claims 1 to 2, wherein the polypropylene glycol monobutyl ether residue has a molecular weight of 1000 to 8000.

4. The composition according to any of claims 1 to 3, wherein said composition further comprises a flame retardant.

5. The composition according to any of claims 1 to 4, wherein said composition, when cured, has a coating removal stress immediately after production of no more than 4.1 N, when measured by the 50 m/min test method.

6. The composition according to any of claims 1 to 4, wherein said composition, when cured, has a coating removal stress after production of less than 1800 g, when measured by the 51 cm/min (20 inches/min) test method.

7. An optical fiber upjacket layer comprising a cured product of the composition according to any of claims 1 to 6.

8. An upjacketed optical fiber comprising the optical fiber upjacket layer according to claim 7.

9. A process of making an optical fiber upjacket layer comprising the step of curing the composition according to any of claim 1 to 6.

## Patentansprüche

1. Härtbare Flüssigharzzusammensetzung für Lichtquellenleiter-Upjackets, die umfasst:
(A) ein (Meth)acrylat-Oligomer, das zwei oder mehr (Meth)acryloylgruppen enthält;
(B) ein reaktives Verdünnungsmittel;
(C) einen Polymerisationsstarter; und
(D) eine Urethan-(meth)acrylat-Verbindung, die mindestens eine (Meth)acryloylgruppe enthält, die in der folgenden allgemeinen Formel (1) gezeigt ist 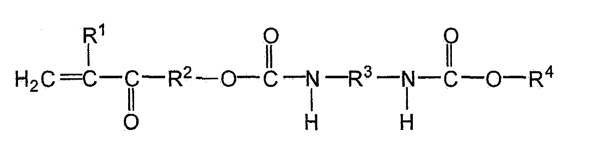
worin R¹ ein Wasserstoffatom bezeichnet, R² und R³ jeweils für sich zweiwertige organische Gruppen bedeuten und R⁴ einen Polypropylenglycolmonobutylether-Rest mit einem Molekulargewicht von 500 bis 20.000 bezeichnet.

2. Zusammensetzung gemäß Anspruch 1, in der das (Meth)acrylat ein Urethan-(meth)acrylat ist.

3. Zusammensetzung gemäß mindestens einem der Ansprüche 1 bis 2, in der der Po'lypropylenglycolmonobutylether-Rest ein Molekulargewicht von 1.000 bis 8.000 hat.

4. Zusammensetzung mindestens einem der Ansprüche 1 bis 3, wobei die Zusammensetzung ferner einen Flammhemmer umfasst.

5. Zusammensetzung mindestens einem der Ansprüche 1 bis 4, wobei die Zusammensetzung, wenn sie ausgehärtet ist, eine Beschichtungsentfernungsspannung ummittelbar nach der Herstellung von nicht mehr als 4,1 N hat, wenn sie mit der 50 m/min-Testmethode gemessen wird.

6. Zusammensetzung mindestens einem der Ansprüche 1 bis 4, wobei die Zusammensetzung, wenn sie ausgehärtet ist, eine Beschichtungsentfernungsspannung nach der Herstellung von weniger als 1.800 g hat, wenn sie mit der 51 cm/min- (20 inch/min) Testmethode gemessen wird.

7. Upjacket-Schicht für optische Wellenleiter, die ein ausgehärtetes Produkt der Zusammensetzung gemäß mindestens einem der Ansprüche 1 bis 6 umfasst.

8. Optischer Wellenleiter mit Upjacket, die die Upjacket-Schicht für optische Wellenleiter gemäß Anspruch 7 umfasst.

9. Verfahren zur Herstellung einer Upjacket-Schicht für optische Wellenleiter, die den Schritt der Aushärtung der Zusammensetzung gemäß mindestens einem der Ansprüche 1 bis 6 umfasst.

## Revendications

1. Composition pour gaine de fibre optique de résine liquide durcissable comprenant ;
(A) un oligomère de (méth)acrylate contenant deux groupes (méth)acryloyle ou plus ;
(B) un diluant réactif ;
(C) un initiateur de polymérisation ; et
(D) un composé de (méth)acrylate d'uréthane contenant au moins un groupe (méth)acryloyle représenté par la formule générale (I) suivante 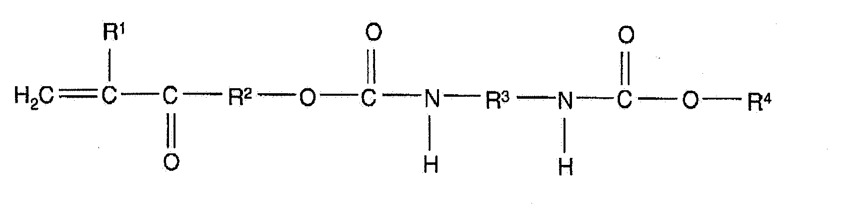
dans laquelle R¹ représente un atome d'hydrogène, R² et R³ représentent individuellement des groupes organiques divalents, et R⁴ représente un résidu de monobutyléther de polypropylèneglycol ayant un poids moléculaire de 500 à 20 000.

2. Composition selon la revendication 1, dans laquelle le (méth)acrylate est un (méth)acrylate d'uréthane.

3. Composition selon l'une quelconque des revendications 1 à 2, dans laquelle le résidu de monobutyléther de polypropylèneglycol présente un poids moléculaire de 1 000 à 8 000.

4. Composition selon l'une quelconque des revendications 1 à 3, dans laquelle ladite composition comprend en plus un retardateur de flammes.

5. Composition selon l'une quelconque des revendications 1 à 4, dans laquelle ladite composition, lorsqu'elle est durcie, présente une contrainte de retrait du revêtement immédiatement après la production d'au plus 4,1 N, lorsqu'elle est mesurée par le procédé de test à 50 m/min.

6. Composition selon l'une quelconque des revendications 1 à 4, dans laquelle ladite composition, lorsqu'elle est durcie, présente une contrainte de retrait du revêtement après la production inférieure à 1 800 g, lorsqu'elle est mesurée par le procédé de test à 51 cm/min (20 pouces/min).

7. Couche de gaine pour fibre optique comprenant un produit durci de la composition selon l'une quelconque des revendications 1 à 6.

8. Fibre optique gainée comprenant la couche de gaine pour fibre optique selon la revendication 7.

9. Procédé de fabrication d'une couche de gaine pour fibre optique comprenant l'étape de durcissement de la composition selon l'une quelconque des revendications 1 à 6.
